# EUROPEAN PATENT APPLICATION

(11) **EP 4 397 735 A1**
(43) Date of publication of application: **10.07.2024**
(21) Application number: 23150735.1
(22) Date of filing: 09.01.2023
(51) Int. Cl.: C09K 19/38, C09K 19/54

(54) **LIQUID CRYSTALLINE POLYMER COMPOSITIONS INCLUDING AN IONOMER COMPATIBILIZER**

(71) Applicant: SHPP Global Technologies B.V., 4612 PX Bergen op Zoom (NL)
(72) Inventor: SONG, Yang, Shanghai (CN); GUO, Mingcheng, Shanghai (CN); SONG, Shijie, Shanghai (CN); XING, Liu, Shanghai (CN)
(74) Representative: Modiano, Gabriella Diana

(57) **Abstract**

Aspects of the disclosure relate to a thermoplastic composition including: a first polymer component including at least one liquid crystalline polymer (LCP); a second polymer component including at least one thermoplastic polymer; and an ionomer-based compatibilizer component. In some aspects the at least one LCP includes a thermotropic LCP.

## Description

### FIELD OF THE DISCLOSURE

The present disclosure relates to liquid crystalline polymer (LCP) compositions, and in particular to LCP compositions including a second thermoplastic polymer and an ionomer compatibilizer.

### BACKGROUND OF THE DISCLOSURE

Liquid crystalline polymers (LCPs), and in particular thermotropic liquid crystalline polymers (TLCP), are a special family of high performance engineering thermoplastics of wide interest and importance in applications including consumer electronics, electronic and electrical appliance (E&Es), automotive, and home appliances. TLCP is a wholly aromatic polyester with liquid crystalline behavior that provides properties such as high flow, high heat resistance, good dimensional stability and good dielectric performance. Accordingly, TLCP are a suitable material for complex and thin wall part designs such as connectors, grill housings, and antennas. TLCP's can be formed into articles having a wall thickness of less than 0.1 millimeters (mm), with negligible dimensional change before and after thermal aging.

Unfortunately, LCPs can be problematic in injection molding processes. The liquid crystalline property causes a high anisotropic effect due to the high orientation of the polymer, resulting in a performance gap between the flow direction and the cross flow direction, including modulus, strength, ductility, warpage and low welding-line strength. Additionally, the high orientation of LCP provides a fibrous/planar structure to the part, and the interaction between layers is weak due to lack of chemical bonding and force, as there are seldom polar functional groups on LCP chains. LCPs can blister during processing, as LCP finished goods may require a surface mounting (SMT) at high temperatures (260 °C or higher).

These and other shortcomings are addressed by aspects of the disclosure.

### SUMMARY

Aspects of the disclosure relate to a thermoplastic composition including: a first polymer component including at least one liquid crystalline polymer (LCP); a second polymer component including at least one thermoplastic polymer; and an ionomer-based compatibilizer component. In some aspects the at least one LCP includes a thermotropic LCP.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a liquid crystalline polymer" includes mixtures of two or more liquid crystalline polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

The present disclosure relates to methods of improving compatibility of liquid crystalline polymer (LCP) blends with a second polymer component using an ionomer component, such as a sulfonated ionomer. The ionomer component improves the compatibility between the LCP and the second polymer component, helping to prevent or minimize phase separation or weak interface bonding between the LCP and second polymer component.

Use of a second polymer component with the LCP may offset certain intrinsic disadvantages of LCPs. Compositions according to aspects of the disclosure have improved anisotropy properties, increased ductility, and reduced blistering problems as compared to LCP compositions that do not include the second polymer component. Properties of the second polymer component may be introduced into the LCP blend/alloy. For example, polyphenylene oxide (PPO) has a lower dielectric constant (intrinsic Dk of 2.6 at 1.9 GHz) as compared to conventional LCPs (intrinsic Dk of 3.3 at 1.9GHz), thus PPO is regarded as a suitable low signal transmission loss material especially at a high frequency bandwidth. LCPs are also a useful telecommunication material because they have a stable Dk and Df at a wide range of frequencies. LCPs also have good thermal resistance and high flow properties. Thus, an alloy of LCP and PPO is anticipated to have synergistic properties from both components, with a lower Dk and anisotropic improvement.

In the present disclosure it has been found that an ionomer compatibilizer, and in particulate a sulfonate ionomer (such as sulfonated PPO), can react with the carboxyl or ester group on the LCP via acidolysis during melt mixing, improving compatibility between the LCP and the second polymer.

Aspects of the disclosure relate to thermoplastic compositions including: a first polymer component including at least one liquid crystalline polymer (LCP); a second polymer component including at least one thermoplastic polymer; and an ionomer-based compatibilizer component.

LCPs may be classified into three types (Type I, Type II, and Type III) according to their heat resistance. Type I and Type II LCP resins are aromatic polyesters with rigid-rod molecular structures, and have a higher heat resistance than the Type III resin. Type I LCPs have the highest heat resistance, followed by Type II LCPs and then Type III LCPs. In some aspects the at least one LCP includes a thermotropic LCP. The LCP has a liquid crystalline transition temperature of at least 180 °C in certain aspects. In further aspects the composition includes a Type I LCP, a Type II LCP, or a combination thereof.

In some aspects the second polymer component includes a polyester, a polyolefin, polyphenylene oxide (PPO), polyetherimide (PEI), polyether ether ketone (PEEK), polyphenylene sulfide (PPS), polyphenylsulfone (PPSU), polyphthalamide (PPA), copolymers thereof, or a combination thereof.

In particular aspects the composition includes from 1 wt% to 98 wt% of the first polymer component, from 1 wt% to 98 wt% of the second polymer component, and from 0.1 wt% to 20 wt% of the ionomer-based compatibilizer component. The combined weight percent value of all components does not exceed 100 wt%, and all weight percent values are based on the total weight of the composition.

The composition may in certain aspects include at least 50 wt% of the first polymer component. In other aspects the composition includes at least 50 wt% of the second polymer component.

In certain aspects the second polymer component has a melting temperature that is within 200 °C of the first polymer component. In further aspects the second polymer component has a melting temperature that is within 190 °C, or within 180 °C, or within 170 °C, or within 160 °C, or within 150 °C, or within 140 °C, or within 130 °C, or within 120 °C, or within 110 °C, or within 100 °C, or within 90 °C, or within 80 °C, or within 70 °C, or within 60 °C, or within 50 °C, or within 40 °C, or within 30 °C, or within 20 °C, or within 10 °C, of the first polymer component.

In some aspects the ionomer-based compatibilizer component includes a third polymer component that is the same as the second polymer component.

The ionomer-based compatibilizer component may be sulfonated in some aspects. In certain aspects the sulfonated ionomer-based compatibilizer component has a degree of sulfonation of from 0.02 to 4.0 milliequivalent per gram (meq/g) as determined by an ion-exchange capacity (IEC) method. The ionomer-based compatibilizer component may be in a form of a salt in particular aspects. In some aspects the salt includes one or more of sodium (Na⁺), potassium (K⁺), lithium (Li⁺), or zinc (Zn²⁺). The ionomers may be neutralized into a salt form by a neutralization reaction with an alkali solution. The ionomer-based compatibilizer may function as a compatibilizer between the LCP and the second polymer component during blending of the components.

In further aspects the first polymer component includes one LCP and the second polymer component includes one thermoplastic polymer.

In some aspects the composition includes at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a component of an electronic device. Exemplary articles include, but are not limited to, antenna applications for mobile/portable electronic devices, portable and wearable devices, wireless switches, automotive navigation and tracking systems, unmanned aerial vehicles (UAVS), and satellites. In particular aspects the article is a thin wall component, having a wall thickness of less than 10 mm. In other aspects the thin wall component has a wall thickness of less than 0.9 mm, or less than 0.8 mm, or less than 0.7 mm, or less than 0.6 mm, or less than 0.5 mm, or less than 0.4 mm, or less than 0.3 mm, or less than 0.2 mm, or less than 0.1 mm.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a first polymer component comprising at least one liquid crystalline polymer (LCP);
a second polymer component comprising at least one thermoplastic polymer; and
an ionomer-based compatibilizer component.

Aspect 2. The thermoplastic composition according to Aspect 1, wherein the at least one LCP comprises a thermotropic LCP.

Aspect 3. The thermoplastic composition according to Aspect 1 or 2, wherein the at least one LCP has a liquid crystalline transition temperature of at least 180 °C.

Aspect 4. The thermoplastic composition according to any of Aspects 1 to 3, wherein the second polymer component comprises a polyester, a polyolefin, polyphenylene oxide (PPO), polyetherimide (PEI), polyether ether ketone (PEEK), polyphenylene sulfide (PPS), polyphenylsulfone (PPSU), polyphthalamide (PPA), copolymers thereof, or a combination thereof.

Aspect 5. The thermoplastic composition according to any of Aspects 1 to 4, wherein the composition comprises from 1 wt% to 98 wt% of the first polymer component, from 1 wt% to 98 wt% of the second polymer component, and from 0.1 wt% to 20 wt% of the ionomer-based compatibilizer component, and wherein the combined weight percent value of all components does not exceed 100 wt%, and all weight percent values are based on the total weight of the composition.

Aspect 6. The thermoplastic composition according to Aspect 5, wherein the composition comprises at least 50 wt% of the first polymer component.

Aspect 7. The thermoplastic composition according to Aspect 5, wherein the composition comprises at least 50 wt% of the second polymer component.

Aspect 8. The thermoplastic composition according to any of Aspects 1 to 7, wherein the second polymer component has a melting temperature that is within 200 °C of the first polymer component.

Aspect 9. The thermoplastic composition according to any of Aspects 1 to 8, wherein the ionomer-based compatibilizer component comprises a third polymer component that is the same as the second polymer component.

Aspect 10. The thermoplastic composition according to any of Aspects 1 to 9, wherein the ionomer-based compatibilizer component is sulfonated, wherein the sulfonated ionomer-based compatibilizer component has a degree of sulfonation of from 0.02 to 4.0 milliequivalent per gram (meq/g) as determined by an ion-exchange capacity (IEC) method.

Aspect 11. The thermoplastic composition according to any of Aspects 1 to 10, wherein the ionomer-based compatibilizer component is in a form of a salt.

Aspect 12. The thermoplastic composition according to Aspect 11, wherein the salt comprises one or more of sodium (Na⁺), potassium (K⁺), lithium (Li⁺), or zinc (Zn²⁺).

Aspect 13. The thermoplastic composition according to any of Aspects 1 to 12, wherein the first polymer component comprises one LCP and the second polymer component comprises one thermoplastic polymer.

Aspect 14. The thermoplastic composition according to any of Aspects 1 to 13, wherein the composition comprises at least one additional additive.

Aspect 15. The thermoplastic composition according to Aspect 14, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 16. An article comprising the thermoplastic composition according to any of Aspects 1 to 15.

Aspect 17. The article according to Aspect 16, wherein the article is a thin wall component of an electronics device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions according to aspects of the disclosure may include one or more of the materials listed in Table 1:

**Table 1 - Components**

| **Component** | **Supplier** | **Function** |
|---|---|---|
| Type I LCP | Haidi | Primary LCP matrix |
| Type II LCP | PRET | Primary LCP matrix |
| PPO 0.4 intrinsic viscosity (IV) | SABIC | Second polymer matrix |
| s-PPO in salt (e.g., Na+ K+ Zn2+) | | Compatibilizer |
| Other additives | Various | Various (e.g., antioxidant, release agent, flow promoter, flame retardant, UV reflecting additive, impact modifier, reinforcing agent) |

The components may be mixed and compounding process on a lab twin-screw extruder (e.g., Toshiba TEM-37BS). The base resin and compatibilizer may be fed from the main feeder. Compounding may proceed according to conventional conditions, such as a screw rotation of 300 revolutions per minute (rpm), 30 kilograms per hour (kg/h) of throughput, and a torque of 30-40% to provide a high yield rate (90% or higher).

In some aspects compositions include 50 wt% or more of one or more of the LCPs listed above, 40 wt% or less PPO, and up to 10 wt% compatibilizer.

In further aspects compositions include 50 wt% or more PPO, 40 wt% or less one or more of the listed LCPs, and up to 10 wt% compatibilizer.

Comparative compositions may be prepared for evaluation against the example compositions described above. In some aspects the comparative compositions do not include a compatibilizer. In further aspects the comparative compositions include a non-ionic compatibilizer. Conventional compatibilizers are polystyrene-based compatibilizers in contrast to compatibilizers according to aspects of the disclosure which can include PPO-based compatibilizers.

The compositions may be evaluated for dimensional stability properties, including thermal expansion coefficient, shrinkage and flow (melt volume rate, MVR). The compositions may also be evaluated for mechanical properties such as strength and ductility. Additional properties that may be evaluated include dielectric properties.

Compositions including LCP as a predominant component are expected to have improved dimensional stability properties as compared to the comparative and/or other example compositions.

Compositions including PPO as a primary component are expected to have improved dielectric performance as compared to the comparative and/or other example compositions.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a first polymer component comprising at least one liquid crystalline polymer (LCP);
a second polymer component comprising at least one thermoplastic polymer; and
an ionomer-based compatibilizer component.

2. The thermoplastic composition according to claim 1, wherein the at least one LCP comprises a thermotropic LCP.

3. The thermoplastic composition according to claim 1 or 2, wherein the at least one LCP has a liquid crystalline transition temperature of at least 180 °C.

4. The thermoplastic composition according to any of claims 1 to 3, wherein the second polymer component comprises a polyester, a polyolefin, polyphenylene oxide (PPO), polyetherimide (PEI), polyether ether ketone (PEEK), polyphenylene sulfide (PPS), polyphenylsulfone (PPSU), polyphthalamide (PPA), copolymers thereof, or a combination thereof.

5. The thermoplastic composition according to any of claims 1 to 4, wherein the composition comprises from 1 wt% to 98 wt% of the first polymer component, from 1 wt% to 98 wt% of the second polymer component, and from 0.1 wt% to 20 wt% of the ionomer-based compatibilizer component, and
wherein the combined weight percent value of all components does not exceed 100 wt%, and all weight percent values are based on the total weight of the composition.

6. The thermoplastic composition according to claim 5, wherein the composition comprises at least 50 wt% of the first polymer component.

7. The thermoplastic composition according to claim 5, wherein the composition comprises at least 50 wt% of the second polymer component.

8. The thermoplastic composition according to any of claims 1 to 7, wherein the second polymer component has a melting temperature that is within 200 °C of the first polymer component.

9. The thermoplastic composition according to any of claims 1 to 8, wherein the ionomer-based compatibilizer component comprises a third polymer component that is the same as the second polymer component.

10. The thermoplastic composition according to any of claims 1 to 9, wherein the ionomer-based compatibilizer component is sulfonated, wherein the sulfonated ionomer-based compatibilizer component has a degree of sulfonation of from 0.02 to 4.0 milliequivalent per gram (meq/g) as determined by an ion-exchange capacity (IEC) method.

11. The thermoplastic composition according to any of claims 1 to 10, wherein the ionomer-based compatibilizer component is in a form of a salt.

12. The thermoplastic composition according to claim 11, wherein the salt comprises one or more of sodium (Na⁺), potassium (K⁺), lithium (Li⁺), or zinc (Zn²⁺).

13. The thermoplastic composition according to any of claims 1 to 12, wherein the first polymer component comprises one LCP and the second polymer component comprises one thermoplastic polymer.

14. The thermoplastic composition according to any of claims 1 to 13, wherein the composition comprises at least one additional additive.

15. The thermoplastic composition according to claim 14, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.
